# EUROPEAN PATENT APPLICATION

(11) **EP 0 794 044 A2**
(43) Date of publication of application: **10.09.1997**
(21) Application number: 97301516.7
(22) Date of filing: 06.03.1997
(51) Int. Cl.: B29C 33/34

(54) **Reciprocating mandrel header**

(30) Priority: 06.03.1996 AU PN8502/96
(71) Applicant: IMPACT INTERNATIONAL PTY. LTD., Smithfield New South Wales 2164 (AU)
(72) Inventor: Lajovic, Dusan Sava, c/o Impact Int. Pty. Ltd., Smithfield, New South Wales 2164 (AU)
(74) Representative: Godwin, Edgar James

(57) **Abstract**

A mandrel support apparatus (1) comprises a plurality of mandrels (2) adapted releasably to support product components for processing, a rotatable turret (3) supporting the mandrels (2) in spaced apart relationship, indexing means to effect rotation of the turret (3), and drive means to effect synchronous axial reciprocation of the mandrels (2) between advanced and retracted positions. The components supported on the mandrels (2) are progressively indexed and successively engaged with a series of substantially stationary processing stations.

## Description

The present invention relates to mandrel supports and headers of the type used in mass production environments.

The invention has been developed primarily for use in the production of plastics dispensing tubes of the type used for toothpaste or the like, and will be described hereinafter with reference to this application. It will be appreciated, however, that the invention is not limited to this particular field of use.

In the production of plastics dispensing tubes, it is known to use a circular array of mandrels fixedly mounted to a rotary turret. The mandrels are typically disposed in a generally parallel orientation and extend axially outwardly from the turret. The remote ends of the mandrels are positioned adjacent a series of processing stations such as forming dies, welding heads, filling tubes, and the like. In use, the turret is periodically indexed such that each mandrel is progressively positioned adjacent successive processing stations. The processing stations are then typically advanced into engagement with the tubes supported on the adjacent mandrels to sequentially perform the appropriate processing operations. There are, however, numerous inherent problems associated with this arrangement.

Firstly, the processing stations tend to be relatively heavy pieces of machinery, requiring substantial power in order to reciprocate at the relatively high speeds needed for high rate mass production. The higher the speed, the greater the inertia forces become, hence requiring stronger and heavier components, which in turn increase the inertia forces. This generally leads to increased energy consumption, increased component wear, reduced reliability and ultimately limits the rate of production.

Another problem is that the relationship between the axial displacement of each processing station and the rotary movement of the mandrel turret is often complex. For example, some processing stations may only need to engage each mandrel momentarily to position a component whereas some stations such as welding heads may need to engage the mandrel for a longer period of time while the components are heated and then cooled. This leads to relatively complex and expensive drive mechanisms and control systems.

Furthermore, the joining techniques used in production of plastics tubes typically involve high frequency induction or hot air welding. Particularly in the case of hot air welding, rapid reciprocation of the welding head tends to jerk the heating element, substantially reducing its service life by inducing fatigue failure.

Also, the placement of additional components such as threaded closure caps onto tubes supported on the mandrels can require relatively complex and expensive gripper arrangements to effect the necessary axial movement necessary for initial placement and the subsequent rotational displacement for screw fastening.

It is an object of the present invention to overcome or substantially ameliorate at least some of these disadvantages of the prior art.

Accordingly, in a first aspect, the invention provides a mandrel support apparatus comprising a plurality of mandrels adapted releasably to support product components for processing, a rotatable turret supporting the mandrels in spaced apart relationship, indexing means to effect rotation of the turret, and drive means to effect synchronous axial reciprocation of the mandrels between advanced and retracted positions, whereby the components supported on the mandrels are progressively indexed and successively engaged with a series of substantially stationary processing stations.

Preferably, the mandrels are disposed in a generally circular array on the turret, and supported in substantially parallel relationship with one another, and parallel with the rotational axis of the turret.

In the preferred embodiment, the drive means comprise a rotary cam drive mechanism, but may alternatively incorporate hydraulic or pneumatic actuators, electromagnetic solenoids, or other suitable drive mechanisms. The cam drive mechanism preferably includes reciprocating track segments engageable with a drum cam to effect reciprocation of the mandrels, and non-reciprocating track segments whereby the mandrels do not reciprocate.

The mandrels are preferably connected to the turret by means of longitudinal splines which permit relative axial displacement but prevent relative rotational displacement.

In the preferred embodiment, the product component supported by each mandrel comprises a tubular body formed from laminated plastics, for use in the manufacture of dispensing tubes for toothpastes, cosmetics, sunscreens, or similar products. Preferably, the processing stations include a welding station for welding a shouldered closure onto the tubular body, and a further station adapted for positioning a screw cap onto the threaded closure.

A preferred embodiment of the invention will now be described, by way of example only, with reference to the accompanying drawings in which:-
Figure 1 is a side elevation showing a mandrel support apparatus according to the invention;
Figure 2 is a front elevation of the apparatus of Figure 1;
Figure 3 is an enlarged view showing one of the mandrels and the associated bearings;
Figure 4 is an enlarged side elevation showing the drum cam drive mechanisms in more detail; and
Figure 5 is an enlarged front view of the cam drive mechanisms.

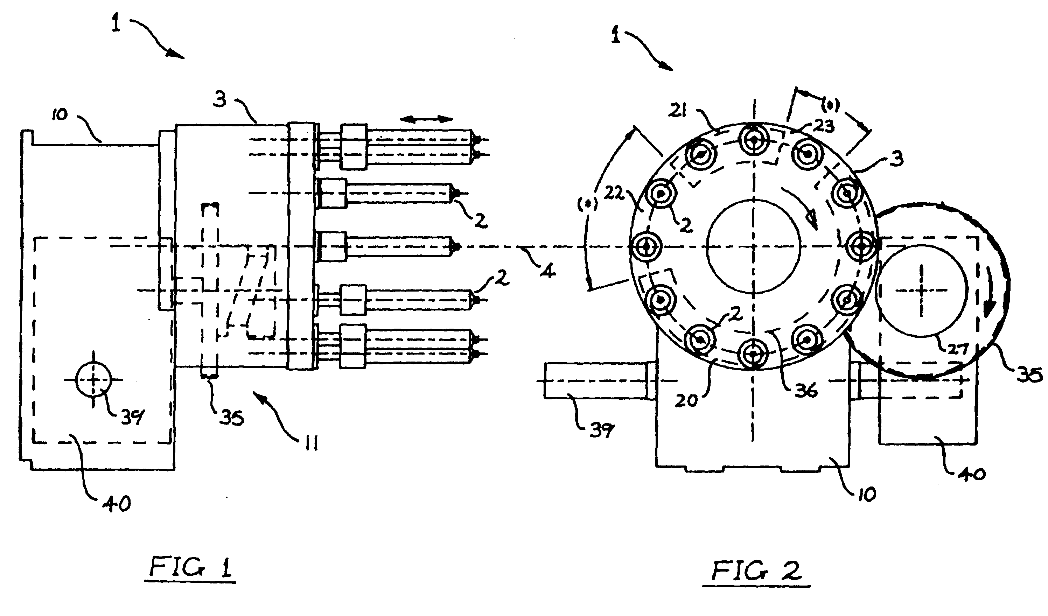

Referring firstly to Figures 1 and 2, wherein corresponding features are denoted by corresponding reference numerals, the invention provides a mandrel support apparatus indicated generally as 1. The apparatus 1 comprises a plurality of mandrels 2 adapted to support product components such as tubular bodies for use in the manufacture of collapsible dispensing tubes or the like (not shown). As best seen in Figure 2, the mandrels are disposed in a generally circular array on a turret 3 in substantially parallel relationship with one another and with the rotational axis 4 of the turret. The turret is rotated by means of a turret indexing mechanism 10, incorporating a drive mechanism 11 to effect synchronous reciprocation of the mandrels.

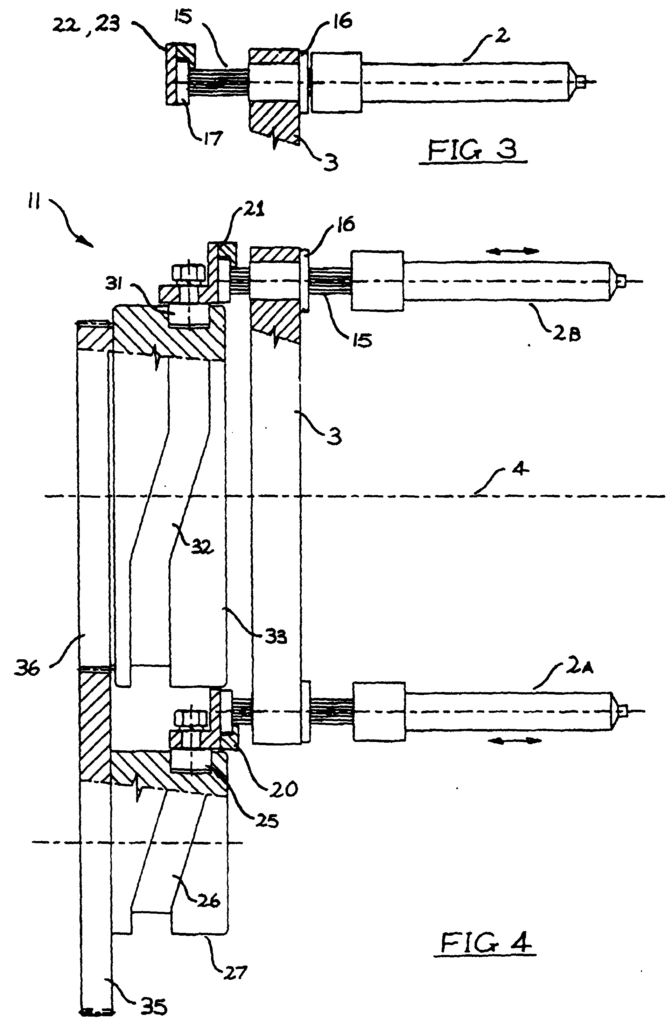

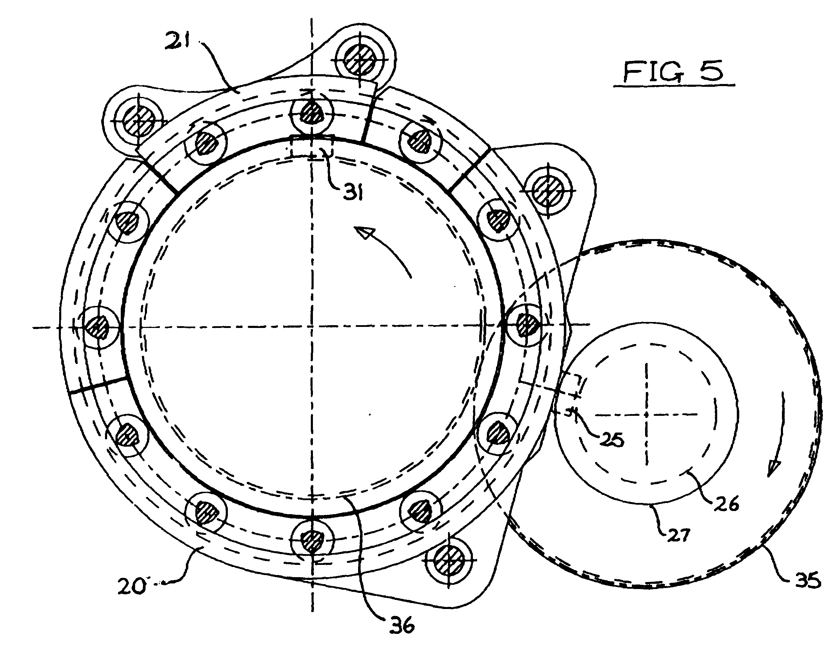

Referring now to Figure 3, each mandrel 2 is mounted to the turret 3 by means of a splined shaft 15 which extends through a complementary linear spline bearing 16. This arrangement permits a limited degree of axial displacement of the mandrel with respect to the turret to accommodate the desired reciprocating movement, but prevents relative rotational displacement. The remote end of the splined shaft 15 terminates in a retaining washer 17 which is alternately engageable with reciprocating track segments 20 and 21 and non-reciprocating track segments 22 and 23 (Figures 3, 4 and 5).

As best seen in Figure 4, one of the lower mandrels 2A is shown temporarily engaged with the first reciprocating track segment 20 which in turn is connected to cam follower 25. The cam follower 25 is running in a first cam track 26 extending circumferentially around the outside of a first cylindrical drum 27. Similarly, the upper mandrel 2B is shown temporarily engaged with the second reciprocating track segment 21 and a second cam follower 31. The second cam follower 31 in turn is running in a second cam track 32 and is thereby operated via second drum cam 33. It will be appreciated, however, that as the turret is progressively indexed, the cam followers will alternatively engage reciprocating and non-reciprocating track segments.

Rotation of the first drum cam 27 is effected by means of first drive gear 35. Similarly, rotation of the second drum cam 33 is effected by the associated second drive gear 36. The drive gears 35 and 36 are retained in meshing engagement to ensure the required synchronous operation. The first drive gear is driven via cam drive shaft 39 and gearbox 40 (Figures 1 and 2). The same drive shaft 39 actuates the turret indexing mechanism 10, to ensure the required synchronous operation. In this way, components supported on the mandrels are progressively indexed and successively engaged with a series of substantially stationary processing stations such as welding heads and the like (not shown).

It will be appreciated that a combination of the rotational movement of the drum cams, the use of both reciprocating and non-reciprocating track segments, and the rotational indexing of the entire turret assembly enables complex combinations of movement including reciprocation of the mandrels between advanced and retracted positions (Figure 1). For example, in the preferred embodiment shown in Figure 2, the angular sectors designated (*) correspond to non-reciprocating or "dwell" stations. The remaining stations reciprocate according to the shapes of the first and second tracks of the respective drum cams.

By providing a mandrel header with which can produce relatively complex reciprocation of multiple mandrels in conjunction with rotational indexing of the turret, the invention permits the use of stationary (i.e. non-reciprocating) processing stations or heads. This in turn obviates the need for complex and expensive drive and control mechanisms to govern the movement of the processing stations and thereby significantly simplifies the apparatus as a whole. Similarly, fragile components such as heating elements, not being subject to rapid reciprocation, are less prone to fatigue failure. These factors lead to further benefits in terms of reduced component wear, increased reliability, lighter and cheaper components, and increased rates of production. Accordingly, the invention represents a commercially significant improvement over the prior art.

Although the invention has been described with reference to specific examples, it will be appreciated by those skilled in the art that the invention may be embodied in many other forms. For example, the reciprocating movement of the mandrels could be controlled by hydraulic or pneumatic cylinders, electromechanical solenoids, mechanical linkages, or other suitable drive means.

## Claims

1. A mandrel support apparatus comprising a plurality of mandrels adapted releasably to support product components for processing, a rotatable turret supporting the mandrels in spaced apart relationship, indexing means to effect rotation of the turret, and drive means to effect synchronous axial reciprocation of the mandrels between advanced and retracted positions, whereby the components supported on the mandrels are progressively indexed and successively engaged with a series of substantially stationary processing stations.

2. A mandrel support apparatus according to claim 1, wherein the mandrels are disposed in a generally circular array on the turret, and supported in substantially parallel relationship with the rotational axis of the turret.

3. A mandrel support apparatus according to claim 1 or claim 2, wherein the drive means comprise a rotary cam drive mechanism.

4. A mandrel support apparatus according to claim 3, wherein said rotary cam drive mechanism includes reciprocating track segments, non-reciprocating track segments, and cam followers adapted alternately to engage the reciprocating and non-reciprocating track segments.

5. A mandrel support apparatus according to claim 4, including a first cam follower running in a first cam track formed in a first cylindrical drum, and a second cam follower running in a second cam track formed in a second cylindrical drum, such that the cam followers alternately engaging reciprocating and non-reciprocating track segments.

6. A mandrel support apparatus according to claim 5, wherein rotation of the first drum is effected by means of a first drive gear, and rotation of the second drum is effected by means of a second drive gear, the first and second drive gears being retained in meshing engagement for synchronous operation.

7. A mandrel support apparatus according to claim 6, wherein a drive shaft associated with the first or second drive gears actuates the turret indexing mechanism, to ensure synchronous operation.

8. A mandrel support apparatus according to claim 1 or claim 2, wherein the drive means incorporate hydraulic or pneumatic actuators.

9. A mandrel support apparatus according to claim 1 or claim 2, wherein the drive means comprise electromagnetic solenoids.

10. A mandrel support apparatus according to any one of the preceding claims, wherein the mandrels are connected to the turret by means of longitudinal splines adopted to permit relative axial displacement and to prevent relative rotational displacement.

11. A mandrel support apparatus according to any one of the preceding claims, wherein the product component supported by each mandrel comprises a tubular body formed from a laminated plastics material, for use in manufacture of dispensing tubes.

12. A mandrel support apparatus according to claim 11, wherein the processing stations include a welding station for welding a threaded shoulder closure onto the tubular body, and a further station adapted for positioning a screw cap onto the threaded closure.
